(19) Europäisches Patentamt
European Patent Office
Office européen des brevets

(11) EP 2 249 421 A1

(12) # EUROPEAN PATENT APPLICATION
published in accordance with Art. 153(4) EPC

(43) Date of publication:
**10.11.2010 Bulletin 2010/45**

(21) Application number: **09715515.4**

(22) Date of filing: **26.02.2009**

(51) Int Cl.:
***H01M 8/02*** (2006.01) ***H01B 1/06*** (2006.01)
***H01M 4/86*** (2006.01) ***H01M 8/10*** (2006.01)

(86) International application number:
**PCT/JP2009/054114**

(87) International publication number:
**WO 2009/107863 (03.09.2009 Gazette 2009/36)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **29.02.2008 JP 2008049510**

(71) Applicant: **Sumitomo Chemical Company, Limited**
**Tokyo 104-8260 (JP)**

(72) Inventors:
- **HIROSE, Kenichi**
**Suita-shi**
**Osaka 565-0803 (JP)**
- **SHINODA, Hiroshi**
**Niihama-shi**
**Ehime 792-0002 (JP)**
- **MACHIDA, Yoichiro**
**Tsukuba-shi**
**Ibaraki 305-0821 (JP)**
- **HORIE, Kensaku**
**Tsukuba-shi**
**Ibaraki 305-0035 (JP)**

(74) Representative: **Vossius & Partner**
**Siebertstrasse 4**
**81675 München (DE)**

(54) **POLYMER ELECTROLYTE COMPOSITION**

(57) A polymer electrolyte composition comprising a component (A) defined below, and at least one kind of a component (B) selected from the group consisting of a component (B1) defined below and a component (B2) defined below: (A) a polymer electrolyte; (B1) a compound having a degree of affinity for platinum of 10% or more; and (B2) a compound having at least two kinds of atoms having an unshared electron pair, selected from the group consisting of a nitrogen atom, a phosphorus atom, and a sulfur atom in the molecule.



Printed by Jouve, 75001 PARIS (FR)

## Description

TECHNICAL FIELD

The present invention relates to a polymer electrolyte composition. More specifically, the present invention relates to a polymer electrolyte composition which is suitable for obtaining a member of a solid polymer fuel cell.

BACKGROUND ART

A solid polymer fuel cell (hereinafter sometimes referred to as a "fuel cell") is a power-generating device to generate electricity using the chemical reaction of hydrogen with oxygen, and as one type of next-generation energy is greatly expected in the fields of the electric appliance industry, the automotive industry, or the like. The fuel cell includes a basic unit having a membrane-electrode assembly (hereinafter sometimes referred to as an "MEA) in which each catalyst layer is provided on both sides of the polymer electrolyte membrane. Further, for this catalyst layer, fine particles of platinum or a platinum-based alloy are usually used as a catalyst component.
As a polymer electrolyte membrane used in the fuel cell, hydrocarbon polymer electrolytes have attracted attention, instead of the conventional fluorine-based polymer electrolytes, since they are inexpensive and have excellent heat resistance. Among these hydrocarbon polymer electrolytes, such polymer electrolytes in which an ionic segment having an ion conductive component and a non-ionic segment having no ion conductive component can form a microphase-separated polymer electrolyte membrane have been hitherto investigated since they provide suitable characteristics for exhibiting excellent ion conductivity by allowing the ionic segment to form a good ion conductive pathway in the polymer electrolyte membrane (see, for example, JP-2003-31232-A and JP-2003-113136-A).
However, there are cases where a polymer electrolyte membrane composed of a hydrocarbon polymer electrolyte has lower long-term operation stability of a fuel cell (hereinafter referred to as the "long-term stability"), as compared with a polymer electrolyte membrane composed of a fluorine-based polymer electrolyte. As a factor for causing reduction in long-term stability, various causes are presumed, but one of the causes is known to be deterioration of the polymer electrolyte membrane due to peroxides (for example, hydrogen peroxide and the like) generated during the operation of the fuel cell, or radicals generated from the peroxides. Therefore, it is one of the measurements for long-term stability of the fuel cell to improve the durability of the polymer electrolyte membrane (hereinafter referred to as the "radical resistance") against such peroxides or radicals (these peroxides and radicals are hereinafter sometimes collectively referred to as the "peroxide components").
Moreover, in recent years, as a factor for reducing the long-term stability of the fuel cell, it is reported that a part of platinum present in a catalyst layer is precipitated in the polymer electrolyte membrane during the operation of the fuel cell, which thus makes it easier to generate peroxide components around platinum. In the same document, it is also reported that deterioration of the polymer electrolyte membrane is caused by the peroxide components (see HASEGAWANAOKI et al., Abstract of The 49th Proceedings of Battery Symposium in Japan (2008), p. 19).
A fuel cell provided with a polymer electrolyte membrane deteriorated by peroxide components generated during the operation of the fuel cell tends to have reduction in the power-generating performance. This is attributed to reduction in the ion conductivity of the deteriorated polymer electrolyte membrane.
On the other hand, in the field of polymer materials, for example, antioxidants such as a hindered phenolic antioxidant have been conventionally used for the purpose of inhibiting the deterioration of melting during processing or deterioration by oxidation occurring over time. However, although such an antioxidant was used in the polymer electrolyte membrane for a fuel cell in response to the requirements of improvement of the radical resistance, the improvement of the long-term stability of the fuel cell was insufficient. Such improvement of the long-term stability is an important issue for the practical use of the fuel cell, and it is eagerly desired to realize a member of a fuel cell, in particular, a polymer electrolyte membrane, for providing a fuel cell having excellent long-term stability.
Under these circumstances, it is an object of the present invention to provide a polymer electrolyte composition for obtaining a member for a fuel cell, in particular, a polymer electrolyte membrane, for realizing a fuel cell having excellent long-term stability. Further, it is another object of the present invention to provide a fuel cell having excellent long-term stability formed by using the polymer electrolyte membrane.

DISCLOSURE OF INVENTION

The present inventors have made extensive investigations in order to solve the above-described problems, and as a result, they have completed the present invention. That is, the present invention provides the following <1>.

<1> A polymer electrolyte composition including:

a component (A) defined below, and
a component (B) selected from the group consisting of a component (B1) defined below and a component (B2) defined below:

(A) a polymer electrolyte;
(B1) a compound having a degree of affinity for platinum of 10% or more; and
(B2) a compound having at least two kinds of atoms having an unshared electron pair, selected from the group consisting of a nitrogen atom, a phosphorus atom, and a sulfur atom in the molecule.

The present inventors have found that precipitation of platinum in a membrane as reported in HASEGAWA NAOKI et al., Abstract of The 49th Proceedings of Battery Symposium in Japan (2008), p. 19 can be prevented by using a polymer electrolyte composition including a compound [component (B1)] in which the affinity for platinum (hereinafter also referred to as the "platinum affinity") is a specific amount or more, when a member for a fuel cell, in particular, a polymer electrolyte membrane is prepared. Such prevention of precipitation of platinum generated by the operation of the fuel cell can realize a fuel cell having excellent long-term stability.
Furthermore, in the following description, such a polymer electrolyte membrane for realizing a fuel cell having excellent long-term stability is sometimes referred to as a "polymer electrolyte membrane having excellent long-term stability".
In addition, the present inventors have found that the radical resistance of the obtained polymer electrolyte membrane itself can be remarkably improved by using a polymer electrolyte composition including a compound [component (B2)] having an specific unshared electron pair in the atom molecule. Such a polymer electrolyte membrane having excellent radical resistance can realize a fuel cell having excellent long-term stability. Therefore, the present invention provides the following <2> to <4>.

<2> The polymer electrolyte composition according to claim 1, wherein the component (B) is the component (B2);
<3> The polymer electrolyte composition according to <1> or <2>, wherein the component (B2) is a compound having a thio group or a mercapto group as a functional group including a sulfur atom and further having an amino group or an imino group as a functional group including a nitrogen atom; and
<4> The polymer electrolyte composition according to any one of <1> to <3>, wherein the component (B2) is a compound having a heterocycle including at least one of the atoms having an unshared electron pair.
As described above, the component (B1) can prevent the precipitation of platinum in the polymer electrolyte membrane sufficiently, and the present invention further provides the following <5>.
<5> The polymer electrolyte composition of <1>, wherein the component (B) is the component (B1).
In addition, the present inventors have discovered phenothiazines as a compound which has a nitrogen atom and a sulfur atom as an atom having an unshared electron pair in the molecule, and further having a platinum affinity of 10% or more. That is, the present invention provides the following <6>.
<6> The polymer electrolyte composition according to any one of <1> to <4>, wherein the component (B) is a phenothiazine represented by the following formula (10):

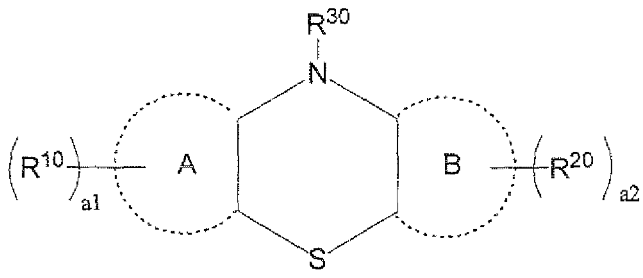 (10)

wherein Ring A and Ring B, which are the same or different, each represent a benzene ring or a naphthalene ring; $R^{10}$ attached to Ring A and $R^{20}$ attached to Ring B each represent an alkyl group having 1 to 10 carbon atoms, a halogenated alkyl group having 1 to 10 carbon atoms, an alkoxy group having 1 to 10 carbon atoms, an alkylthio group having 1 to 10 carbon atoms, an aryl group having 6 to 10 carbon atoms, or a halogen atom; a1 and a2, which are the same or different, each represent an integer of 0 to 2; when a1 is 2, the two $R^{10}$ may be the same or different, and when a2 is 2, the two $R^{20}$ may be the same or different; and $R^{30}$ represents a hydrogen atom, an alkyl group having 1 to 10 carbon atoms, a halogenated alkyl group having 1 to 10 carbon atoms, or an aryl group having 6 to 10 carbon atoms.

As shown by the formula (10), the phenothiazines may be used as either the component (B1) or the component (B2), and can improve the radical resistance of the polymer electrolyte membrane itself while preventing the precipitation of platinum in the polymer electrolyte membrane.

Furthermore, the present invention provides the following <7> to <9> as specific embodiments according to any one of the above-described polymer electrolyte compositions.

<7> The polymer electrolyte composition according to any one of <1> to <6>, wherein the amount of the component (B) is 0.1 to 30 parts by weight based on 100 parts by weight of the component (A);

<8> The polymer electrolyte composition according to any one of <1> to <7>, wherein the component (A) is a hydrocarbon polymer electrolyte; and

<9> The polymer electrolyte composition according to <8>, wherein the hydrocarbon polymer electrolyte contains an aliphatic hydrocarbon or an aromatic hydrocarbon to which at least one kind of acidic group selected from the group consisting of a sulfonic acid group ($-SO_3H$), a carboxylic group (-COOH), a phosphonic acid group ($-PO_3H_2$) and a sulfonylimide group ($-SO_2NHSO_2-$) is introduced.

<10> The polymer electrolyte composition according to any one of <1> to <9>, further including a component (C) defined below:

(C) a catalyst component.

In addition, the present invention provides the following <11> to <15>, using any one of the above-described polymer electrolyte compositions.

<11> A polymer electrolyte membrane prepared from any one of the polymer electrolyte compositions of <1> to <9>;

<12> A membrane-electrode assembly having the polymer electrolyte membrane of <11>;

<13> A catalyst layer prepared from the polymer electrolyte composition of <10>;

<14> A membrane-electrode assembly having the catalyst layer of <13>; and

<15> A fuel cell (solid polymer fuel cell) comprising the membrane-electrode assembly of <12> or <14>.

BEST MODE FOR CARRYING OUT THE INVENTION

The polymer electrolyte composition of the present invention is **characterized in that** it includes:

a component (A) defined below, and

a component (B) selected from the group consisting of a component (B1) defined below and a component (B2) defined below:

(A) a polymer electrolyte;

(B1) a compound having a degree of affinity for platinum of 10% or more; and

(B2) a compound having at least two kinds of atoms having an unshared electron pair, selected from the group consisting of a nitrogen atom, a phosphorus atom, and a sulfur atom in the molecule.

Hereinafter, among these, the polymer electrolyte composition including the component (B1), the polymer electrolyte composition including the component (B2), and the polymer electrolyte composition including the components (B1) and B(2) will be described as a first embodiment of the present invention, a second embodiment of the present invention, and a third embodiment of the present invention, respectively.

<First Embodiment>

As described above, the polymer electrolyte composition which is the first embodiment of the present invention includes the components (A) and (B1) defined below.

<Component (B1)>

The component (B1) is a compound having a platinum affinity of 10% or more. The present inventors have made various investigations on a method for inhibiting the precipitation of platinum in the polymer electrolyte membrane as a means for obtaining polymer electrolyte membrane having excellent long-term stability, as reported in HASEGAWA NAOKI et al., Abstract of The 49th Proceedings of Battery Symposium in Japan (2008), p. 19, and as a result, they have found that a compound having a platinum affinity in a specific range can sufficiently inhibit the precipitation of platinum in the polymer electrolyte membrane.

The platinum affinity as mentioned in the present invention refers to an index indicative of the level of an affinity

for platinum, and particularly indicates an affinity by binding with or being adsorbed to ionized platinum.

The method for determining the platinum affinity will be specifically described by way of an example of determining the platinum affinity of a specific compound (compound A). First, to 10 mg of a compound A is added 5 ml of an aqueous $H_2Pt(Cl)_6$ solution (a platinum standard solution at a platinum concentration of 10 ppm) to prepare a measurement sample. This measurement sample is left to stand at room temperature (about 23°C) for 2 hours. After being left to stand, the ratio of the total weight of platinum binding to or adsorbed to the compound A based on the total weight of used platinum is determine. Herein, it is described about the case where the product that is produced by the compound A binding to or being adsorbed to platinum is precipitated in the measurement sample. That is, as the concentration of platinum in the platinum standard solution used is denoted as X and the concentration of liquid platinum in the measurement sample after being left to stand is denoted as Y, the platinum affinity (Z) can be calculated by the following equation:

$$(Z)=\{(X-Y)/X\}\times 100.$$

By using a compound having a platinum affinity of 10% or more when determined as described above in combination with a polymer electrolyte, a polymer electrolyte membrane having excellent long-term stability can be obtained. A higher platinum affinity is better, and the platinum affinity is preferably 20% or more, more preferably 30% or more, and still more preferably 50% or more. It is known that if platinum is ionized (charged), suitable anions such as $[Pt(Cl)_6]^{2-}$ and $[Pt(OH)_6]^{2-}$ are ion-bonded or coordination-bonded to form a dissolved species. A compound having a platinum affinity within the above range can be considered as a compound which can bind to platinum by receiving the electrons of the ionized platinum.

The present inventors have found that a compound having a specific platinum affinity used as the component (B1) prevents precipitation of platinum in the polymer electrolyte membrane, which may occur during the operation of the fuel cell. In order to obtain a compound having a platinum affinity at a specific level or more, for example, the following manner may be used. The affinity of the metal ion or metal for an organic base is determined as being "hard" or "soft" of the acid-base (edited by Masatoshi Watanabe et al., "Basics of Complex Chemistry, Werner Complex and Organic Metal Complex", pp. 65 to 70, Kodansha Ltd., published in May 20, 1989). Platinum, in particular, ionized platinum (platinum having an oxidation number of 2 or 4) is classified into a "soft acid", and has an affinity for a "soft base". As such a "soft base", a compound having a functional group including a sulfur atom (a thio group, a mercapto group, and the like) or a compound having a functional group containing a phosphorus atom (a phosphino group and the like) is known. Accordingly, among the compounds having a sulfur atom and/or a phosphorus atom, a compound which can be applied for the component (B1) can be selected by selecting a compound having a platinum affinity of 10% or more through determination of the platinum affinity by the above-described measurement method for the platinum affinity. Particularly, since easy formation of a complex has a great influence due to a so-called a chelate effect, it is preferable that after the determination of the platinum affinities, a compound having a platinum affinity of 10% or more be selected from:

a compound having a plurality of sulfur atoms or phosphorus atoms in the molecule;
a compound having a sulfur atom and a phosphorus atom in the molecule; and
a compound having at least one sulfur atom or phosphorus atom, and further having at least one atom (an oxygen atom or a nitrogen atom) capable of forming another coordination bond.

Furthermore, when a polymer electrolyte membrane is obtained from the polymer electrolyte composition of the present invention, it is preferable to use a compound such that at least a part of the component (B1) used will be present on the surface or near the surface of the obtained polymer electrolyte membrane. The polymer electrolyte membrane using this compound as the component (B1) is expected to inhibit platinum from penetration into the inside of the polymer electrolyte membrane since during the operation of the fuel cell, the component (B1) binds to or is adsorbed to the ionized platinum on the surface or near the surface of the polymer electrolyte membrane.

In addition, various surface analyses can be used to determine whether the component (B1) is present on the surface or near the surface of the polymer electrolyte membrane. Examples of the surface analyses include XPS analysis, SIMS analysis, reflection-absorption analysis, and the like, among which an optimal surface analysis can be appropriately selected depending on the types of the component (B1) used.

<Second Embodiment>

As described above, the polymer electrolyte composition that is the second embodiment of the present invention

includes the component (A) and the component (B2).

<Component (B2)>

The present inventors have found that a polymer electrolyte composition, using a compound having at least two atoms selected from the group consisting of a nitrogen atom, a phosphorus atom and a sulfur atom in the same molecule with these atoms all having an unshared electron pair in combination with a polymer electrolyte, makes the radical resistance of the polymer electrolyte membrane better when a member for a fuel cell, particularly a polymer electrolyte membrane is obtained. This component (B2) inactivates the peroxide components generated during the operation of the fuel cell by decomposing or capturing them, and thus makes the radical resistance of the polymer electrolyte membrane and the like better.

In the preferable compound used in the component (B2), the atom having the unshared electron pair above is present as a functional group including the atom. Hereinbelow, preferred examples of these functional groups are specifically shown.

Examples of the functional group including a sulfur atom include mercapto group (-SH), thio group (-S-), and a thienyl group such as ones having a heterocycle including a sulfur atom as described later. The functional group including a nitrogen atom is amino group ($-NR_2$, wherein R is a hydrogen atom or an arbitrary organic group, and the two R may be the same or different, or the two R may be bonded to form a ring), imino group (=NH), a pyridyl group such as ones having a heterocycle including a nitrogen atom as described later, and an imidazolyl group. Examples of the functional group including a phosphorus atom include a functional group including a trivalent phosphorus atom such as a phosphino group.

More specific examples of the compound which is preferable as the component (B2) include the followings.

Examples of the compound having both the functional group including a nitrogen atom and the functional group including a sulfur atom include phenothiazine, 2-methoxyphenothiazine, 2-methylthiophenothiazine, 2-ethylthiophenothiazine, 2-chlorophenothiazine, 2-(trifluoromethyl)phenothiazine, methylene blue, benzoyl leucomethylene blue, 2-mercaptobenzimidazole, 2-mercapto-5-methylbenzimidazole, 5-amino-2-mercaptobenzimidazole, 2-(methylthio)benzoimidazole, 2-(4-thiazolyl)benzoimidazole, benzothiazole, 2,5-dimethylbenzothiazole, 6-amino-2-mereaptobenzothiazole, 2-mercapto-6-nitrobenzothiazole, acetonebenzothiazolyl-2-hydrazone, 6-mercaptopurine, 6-methylmercaptopurine, 2,6-dimercaptopurine, 2-thioxanthine, 6-thioguanine, 2-aminobenzenethiol, 2-methylyhioaniline. 4-methylthioaniline, 4-aminobenzenethiol, 2-mercaptopyridine, 4-mercaptopyridine, 2,2'-dipyridyl disulfide, 4,4'-dipyridyl disulfide, 1,8-bis(2-pyridyl)-3,6-dithiaoctane, 8-mercaptoquinoline hydrochloride, S-methylthiobarbituric acid, 2-ethyl-3-(methylthio)pyrazine, 2-aminophenyl phenyl sulfide, bis(2-aminophenyl) sulfide, bis(4-aminophenyl) sulfide, N-tert-butylbenzenesulfamide, 2-(2-thienyl)pyridine, and the like.

Examples of the compound having both the functional group including a sulfur atom and the functional group including a phosphorus atom include tri(2-thienyl)phosphine, a compound represented by the following structural formula:

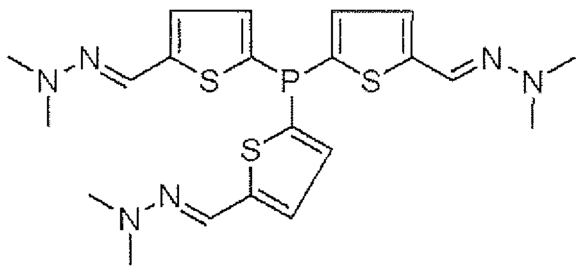

(RCL R469378, manufactured by ALDRICH), and the like.

Examples of the compound having both the fictional group including a nitrogen atom and the functional group including a phosphorus atom include diphenyl-2-pyridylphosphme, 4-(dimethylamino)phenyldiphenylphosphine, 4,6-bis(diphenylphosphino)phenoxazine, and the like.

Among these, the compound having both a functional group including a nitrogen atom and a functional group including a sulfur atom is preferable, and the compound having both a functional group of a mercapto group and/or a thio group and a functional group of an amino group and/or an imino group is more preferable. Among the exemplified compounds, phenothiazine, 2-methoxyphenothiazine, 2-methylthiophenothiazine, 2-ethylthiophenothiazine, 2-chlorophenothiazine, 2-(trifluoromethyl)phenothiazine, 2-mercaptobenzimidazole, 2-mercapto-5-methyl benzimidazole, 5-amino-2-mercaptobenzimidazole, 2-(methylthio)benzimidazole, 2-(4-thiazalyl)benzimidazole, 6-amino-2-mercaptobenzothiazole, 2-mercapto-6-nitrobenzothiazole, acetonebenzothiazolyl-2-hydrazone, 6-mercaptopurine, 6-methylmercaptopurine, 2,6-dimercaptopurine, 2-thioxanthine, 6-thioguanine, 2-aminobenzenethiol, 2-methylthioaniline, 4-methylthioaniline, 4-aminobenzenethiol, 2-aminophenyl phenyl sulfide, bis(2-aminophenyl sulfide), or the like is preferably used as the component (B).

Particularly preferable examples of the component (B2) include compounds having a heterocycle including at least one atom having an unshared electron pair (hereinafter referred to as the "heterocyclic compound"). This heterocyclic compound is advantageous in that it is relatively easy to mix the heterocyclic compound with the polymer electrolyte as the component (A), and accordingly, a polymer electrolyte composition formed by using the heterocyclic compound has the heterocyclic compound substantially uniformly present in a member for a fuel cell when a member for a fuel cell such as a polymer electrolyte membrane is obtained. As such, that when the polymer electrolyte membrane is obtained, the heterocyclic compound is substantially uniformly present in the polymer electrolyte membrane means at least a part of the heterocyclic compound is present on the surface or near the surface of the polymer electrolyte membrane. For the MEA, it is expected that the influence of the peroxide component is greatly exhibited during the operation of the fuel cell at a portion in the polymer electrolyte membrane, which is in contact with a catalyst layer, and as a result, the presence of the heterocyclic compound (component (B2)) on the surface or near the surface of the polymer electrolyte membrane is expected to be effective in that the radical resistance becomes good.

Such a heterocyclic compound may be:

a compound having a plurality af heterocycles including one atom having an unshared electron pair in the molecule, or a compound having a heterocycle including at least two atoms having an unshared electron pair.

Herein, examples of the heterocycle including at least one atom having an unshared electron pair include:

heterocycles having at least one nitrogen atom such as a pyrrolidine ring, a piperidine ring, a pyrroline ring, a pyrrole ring, a pyridine ring, an imidazole ring, a pyrazole ring, a pyrimidine ring, and a pyrazine ring;
heterocycles having at least one sulfur atom such as a thiolane ring, a thiaridine ring, a thiophene ring, and a dithiaridine ring; and
heterocycles having at least one phosphorus atom such as a phosphabenzene ring.

Furthermore, examples of the heterocycle at least two different types of atoms having an unshared electron pair include:

heterocycles having a nitrogen atom and a sulfur atom such as a thiazine ring and a thiazole ring.

Furthermore, this heterocycle may have delocalization of electrons by the resonance in some cases, but when the component (B2) is used, even if one resonance structure of the heterocycle has a structure in which a nitrogen atom, a sulfur atom, or a phosphorus atom has an unshared electron pair, it is regarded as one including the atom having an unshared electron pair, and a heterocyclic compound including the heterocycle can be suitably used as the component (B2).

Examples of the heterocyclic compound which is particularly preferable as the component (B2) include phenothiazine, 2-methoxyphenothiazine, 2-methylthiophenothiazine, 2-ethylthiophenothiazine, 2-chlorophenothiazine, 2-(tritluoromethyl)phenothiazine, 2-mercaptobenzimidazole, 2-mercapto-5-methylenzimidazole, 5-amino-2-mercaptobenzimidazole, 2-(methylthio)benzimidazole, 2-(4-thiazolyl)benzimidazole, 6-amino-2-mercaptobenzothiazole, 2-mercapto-6-nitrobenzothiazole, acetonebenzothiazolyl-2-hydrazone, 6-mercaptopurine, 6-methylmercaptopurine, 2,6-dimercaptopurine, 2-thioxanthine, and 6-thioguanine, and particularly, phenothiazine, 2-methylthiophenothiazine, 2-ethylthiophenothiazine, 2-mercaptobenzimidazole, 2-mercapto-5-methylbenzimidazole, 5-amino-2-mercaptobenzimidazole, 6-methylmercaptopurine, 2,6-dimercaptopurine, and the like.

<Phenothiazines>

Furthermore, the present inventors have found that as the heterocyclic compound, particularly, phenothiazines represented by the formula (10) are useful, and the phenothiazines have a platinum affinity as above of 10% or more. In other words, these phenothiazines can be said to be extremely useful compounds so as to be used as the component (B1) in the first embodiment of the present invention (polymer electrolyte composition) or as the component (B2) in the second embodiment of the present invention (polymer electrolyte composition).

Here, although being repeated, this formula (10) is shown below.

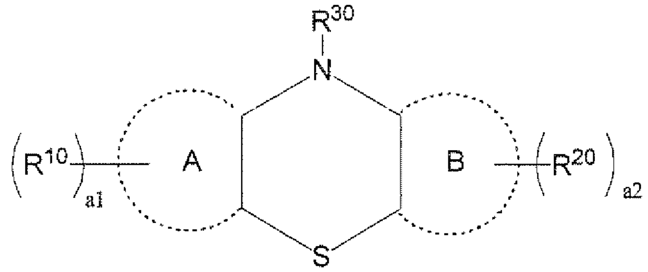

(10)

wherein Ring A and Ring B, which are the same or different, each represent a benzene ring or a naphthalene ring. Generally, the phenothiazines correspond to a case where Ring A and Ring B are both benzene rings, but in the present invention, the "phenothiazines" may be referred to even in the case where either or both of Ring A and Ring B is or are a naphthalene ring.

$R^{10}$ attached to Ring A and $R^{20}$ attached to Ring B each represent an alkyl group having 1 to 10 carbon atoms, a halogenated alkyl group having 1 to 10 carbon atoms, an alkoxy group having 1 to 10 carbon atoms, an alkylthio group having 1 to 10 carbon atoms, an aryl group having 6 to 10 carbon atoms, or a halogen atom. Examples of the alkyl group include a methyl group, an ethyl group, a propyl group, a butyl group, a hexyl group, an octyl group, a decyl group, and the like, and these may be a linear or branched chain, and may form a ring. Examples of the alkoxy group include a methoxy group, an ethoxy group, a propoxy group, a butyloxy group, a hexyloxy group, an octyloxy group, a decyloxy group, and the like, and these may be a linear or branched chain, and may form a ring. Examples of the alkylthio group include a methylthio group, an ethylthio group, a propylthio group, a butylthio group, a hexylthio group, an octylthio group, and a decylthio group, and these may be a linear or branched chain, and may form a ring. Examples of the aryl group typically include a phenyl group, a naphthyl group, and the like, and examples of the halogen atom include a fluorine atom, a chlorine atom, a bromine atom, and the like.

$R^{30}$ represents a hydrogen atom, an alkyl group having 1 to 10 carbon atoms, a halogenated alkyl group having 1 to 10 carbon atoms, or an aryl group having 6 to 10 carbon atoms. Examples of the alkyl group and the aryl group are the same as those of $R^{10}$ and $R^{20}$. Examples of the halogenated alkyl group include, among the alkyl groups as exemplified above, the groups in which a part or a whole of the hydrogen atoms attached to carbon atoms is substituted with halogen atoms such as a fluorine atom and a chlorine atom.

a1 and a2, which are the same or different, each represent an integer of 0 to 2. When a1 is 2, the two $R^{10}$ may be the same or different, and when a2 is 2, the two $R^{20}$ may be the same or different.

Moreover, as a result of the investigations conducted by the present inventors, it is confirmed that these phenothiazines are precipitated in the measurement sample by binding to or being adsorbed to platinum, as described for the method for determining a platinum affinity as above. These phenothiazines are one of the heterocyclic compounds, and thus they are easily present in the polymer electrolyte membrane uniformly and present on the surface or near the surface of the polymer electrolyte membrane. Further, even when the ionized platinum attempts to penetrate into the polymer electrolyte membrane, this ionized platinum is supplemented or inactive on the surface or near the surface, which is expected to inhibit the deterioration of the polymer electrolyte membrane, and thus, the phenothiazines are particularly effective as the component (B1). Further, the phenothiazines have advantages that the platinum affinities of these phenothiazines are easily determined, and the phenothiazines are easily commercially available.

Furthermore, these phenothiazines have a nitrogen atom and a sulfur atom in the molecule, in which the atoms all have an unshared electron pair. Accordingly, it is thought that the synergic effect of the atoms be efficiently exhibited to decompose, capture, or inactivate the peroxide components present in various forms, and thus, the phenothiazines are effective as the component (B2).

The heterocyclic compounds, particularly phenothiazines, which are preferable as the component (B2) used in the present invention have been described above, but a polymer compound formed from monomer units derived from such heterocyclic compounds may also be used as the component (B2). As long as these polymer compounds have at least two atoms having an unshared electron pair, selected from the group consisting of a nitrogen atom, a phosphorus atom, and a sulfur atom, in the molecule, the polymer compounds can be used to obtain a polymer electrolyte membrane and the like having good radical resistance.

The polymer electrolyte compositions including the component (B1) and the polymer electrolyte composition including the component (B2) have been described above, and also, the phenothiazines as the component (B1) as well as the component (B2) have been specifically described, but for example, the compound (B2) containing at least two atoms having an unshared electron pair, selected from the group consisting of a nitrogen atom, a phosphorus atom, and a sulfur atom, in the molecule and the component (B1) having a platinum affinity of 10% or more can be used in combination. As such, a case of using the component (B1) and the component (B2) in combination is regarded as the

polymer electrolyte composition that is the third embodiment of the present invention. In addition, in the description below, the polymer electrolyte composition of the first embodiment of the present invention, the polymer electrolyte composition of the second embodiment of the present invention, and the polymer electrolyte composition of the third embodiment of the present invention may be sometimes collectively referred to as "the polymer electrolyte compositions of the first to third embodiments of the present invention".

In the first to third embodiments of the present invention above, at least one kind of the component (B) selected from the group consisting of the component (B1) and the component (B2) is preferably soluble in a solvent. The reason is that when the polymer electrolyte composition of the present invention is used in a solution cast method as described later, such component (B) is dissolved in a solvent together with the polymer electrolyte of the component (A), and thus, it is easy to prepare a solution composition (polymer electrolyte solution). If such a compound that is insoluble in the solvent or the polymer electrolyte solution is used as the component (B1) or the component (B2), there is a tendency where it becomes relatively difficult to obtain a polymer electrolyte membrane by forming a film with the polymer electrolyte composition. From the viewpoint of avoiding such an inconvenience, the compound employed for the component (B) is preferably soluble in the solvent. The phenothiazines are sufficiently soluble in the solvent, and accordingly, are preferable in terms of its solubility in the solvent.

The blending amount of the component (B) in the polymer electrolyte composition of the present invention is selected from a range which does not significantly interfere with the characteristics such as ion conductivity of the polymer electrolyte of the component (A), The amount of the component (B) is preferably from 0.1 to 30 parts by weight, and more preferably from 0.5 to 25 parts by weight, based on 100 parts by weight of the component (A). If the blending amount of the component (B) is within this range, the long-term stability of the fuel cell can be accomplished, and in addition, the characteristics of the polymer electrolyte (component (A)) are not significantly interfered, and as a result, there is no case where the power-generating performance or the like of the polymer electrolyte membrane is significantly impaired.

<component (A)>

Next, the polymer electrolyte of the component (A), which is commonly used in the first to third embodiments of the present invention will be described.

As the polymer electrolyte, fluorine-based polymer electrolytes such as ones constituting a polymer electrolyte membrane or the like, such as Nafion (registered trademark of Dupont), Aciplex (registered trademark of Asahi Kasei Corporation), Flemion (registered trademark ofAsahi Glass Co., Ltd.) manufactured by Asahi Glass Co., Ltd., hydrocarbon polymer electrolytes in which acidic groups such as a sulfonic acid group ($-SO_3H$), a carboxylic group (-COOH), a phosphonic acid group ($-PO_3H_2$) and a sulfonylimide group ($-SO_2NHSO_2-$) are introduced to aliphatic hydrocarbon or an aromatic hydrocarbon, or others are used. However, as noted above in Background Art, there is a concern that the hydrocarbon polymer electrolyte may have low radical resistance, and thus, if the component (A) is a hydrocarbon polymer electrolyte, an effect that a polymer electrolyte membrane and the like having excellent radical resistance can be obtained according to the present invention. Further, as compared with the fluorine-based polymer electrolytes, the hydrocarbon polymer electrolyte is also advantageous from the viewpoint of low cost.

The hydrocarbon polymer electrolyte is one having a structural unit containing an acidic group and a structural unit having no ion-exchange group (acidic groups and basic groups), and when it is used to form a polymer electrolyte membrane, the water resistance or the mechanical strength tends to be excellent, which is thus preferable.

The copolymerization type of these two structural units may be any one of random copolymerization, alternating copolymerization, block copolymerization, and graft copolymerization, or combinations of these copolymerization types.

Furthermore, the hydrocarbon polymer electrolyte means a polymer electrolyte having halogen atoms at 15% by weight or less, as expressed by the content ratio by weight of the atoms constituting the polymer electrolyte. This hydrocarbon polymer electrolyte has an advantage that it is inexpensive as compared with the fluorine-based polymer electrolytes. Therefore, the more preferable and particularly preferable hydrocarbon polymer electrolyte is one having substantially no halogen atoms, and is advantageous in that there is no concern that during the operation of the fuel cell that the hydrocarbon polymer electrolyte may generate halogenated hydrogen or the like to corrode other members.

Among the hydrocarbon polymer electrolytes, the aromatic polymer electrolyte has superior mechanical strength and high heat resistance, which is thus preferable.

This hydrocarbon polymer electrolyte has an ionic segment mainly including a structural unit containing an acidic group and a non-ionic segment mainly including a structural unit having no ion-exchange group, and if the copolymerization type of the polymer electrolyte is block copolymerization or graft copolymerization, the polymer electrolyte membrane having the microphase-separated structure as described later tends to be easily formed, which is thus preferable. In addition, there is an advantage that if the phase having a dense segment having an acidic group can form a continuous phase in the film thickness direction, a polymer electrolyte membrane having superior proton conductivity can be obtained, which is thus more preferable.

Herein, the ionic segment means a segment including 0.5 or more acidic groups on average per structural unit constituting the segment, and it is more preferable that the segment include 1.0 or more acidic groups on average per structural unit.

On the other hand, the non-ionic segment means a segment including less than 0.5 ion-exchange groups on average per structural unit constituting the segment, it is more preferable that the segment include 0.1 or fewer ion-exchange groups on average per structural unit, and it is still more preferable that the segment include 0.05 or fewer ion-exchange groups on average per structural unit.

Typically, the ionic segment and the non-ionic segment are bonded directly, or coupled at a suitable atom or group of atoms to form a block copolymer.

In the polymer electrolyte applied in the present invention, the introduction amount of the acidic groups in charge of proton conductivity, as expressed by an ion exchange capacity, is preferably from 0.5 meq/g to 4.0 meq/g, and more preferably from 1.0 meq/g to 3.0 meq/g. If the ion exchange capacity is within the above range, sufficient proton conductivity for a polymer electrolyte for a fuel cell is exhibited, and thus, the water resistance also tends to be relatively good.

Also, the preferable aromatic polymer electrolyte may have an aromatic ring in the main chain in the ionic segment as well as a side chain having an aromatic ring, and it is preferable that the aromatic polymer electrolyte have a form in which at least one of the aromatic rings in the main chain and the aromatic rings in the side chain has an acidic group directly binding to the aromatic ring. The present applicant has found that such an aromatic polymer electrolyte having an acidic group directly binding to an aromatic ring exhibits superior proton conductivity, and suggested in JP-2007-177197-A.

Specific examples of the acidic group are as described above, but among these acidic groups, a sulfonic acid group is particularly preferable.

More specifically, examples of the polymer electrolyte used in the present invention include the polymer electrolytes having, as an ionic segment, at least one segment represented by the following formula (1a), (2a), (3a), or (4a) [hereinafter sometimes referred to as "the formulae (1a) to (4a)"]

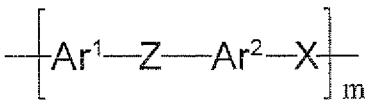

(1a)

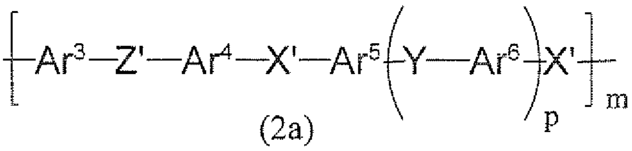

(2a)

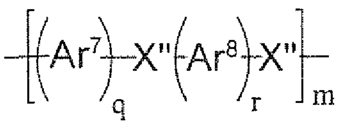

(3a)

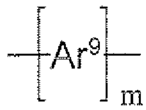

(4a)

wherein m represent an integer of 5 or more. $Ar^1$ to $Ar^9$, which are the same or different, each represent a divalent aromatic group which may have an aromatic ring in the main chain and a side chain having an aromatic ring. At least one of the aromatic rings in the main chain and the aromatic rings in the side chain has an acidic group directly binding to the aromatic ring.

Z and Z', which are the same or different, each represent CO or $SO_2$, and X, X', and X", which are the same or different, each represent O or S. Y represents a direct bond or a group represented by the following formula (1c). p represents 0, 1, or 2, and q and r, which are the same or different, each represent 1, 2, or 3, and
as a non-ionic segment, at least one segment represented by the following formula (1b), (2b), (3b), or (4b) [hereinafter sometimes referred to as "the formulae (1b) to (4b)"]:

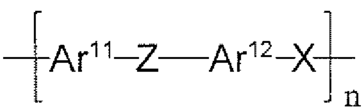

(1b)

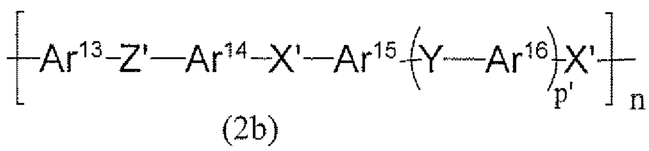

(2b)

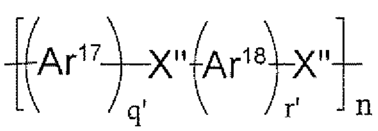

(3b)

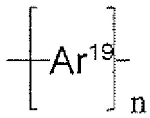

(4b)

wherein n represents an integer of 5 or more. $Ar^{11}$ to $Ar^{19}$, which are the same or different, each represent a divalent aromatic group which may have a substituent in the side chain. Z and Z', which are the same or different, each represent CO or $SO_2$ and X, X', and X", which are the same or different, each represent O or S. Y represents a direct bond or a group represented by the following formula (1c). p' represents 0, 1, or 2, and q' and r', which are the same or different, each represent 1, 2, or 3.

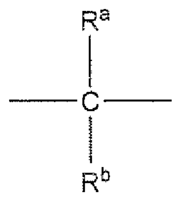

(1c)

wherein $R^a$ and $R^b$, which are the same or different, each represent a hydrogen atom, an alkyl group having 1 to 10 carbon atoms, which may have a substituent, an alkoxy group having 1 to 10 carbon atoms, which may have a substituent, an aryl group having 6 to 18 carbon atoms, which may have a substituent, an aryloxy group having 6 to 18 carbon atoms, which may have a substituent, or an acyl group having 2 to 20 carbon atoms, which may have a substituent, and $R^a$ and $R^b$ may be linked to form a ring together with the carbon atom to which they attach.

$Ar^1$ to $Ar^9$ in the formula (1a) to (4a) each represent a divalent aromatic group. Examples of the divalent aromatic group include divalent monocyclic aromatic groups such as 1,3-phenylene and 1,4-phenylene, divalent condensed ring type aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl, and heteroaromatic groups such as pyridinediyl, quinoxalinediyl and thiophenediyl. Preferred are divalent monocyclic aromatic groups.

Further, $Ar^1$ to $Ar^9$ may be substituted with an alkyl group having 1 to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent, or an acyl group having 2 to 20 carbon atoms, which may have a substituent.

At least one of $Ar^1$ and/or $Ar^2$ in the structural unit constituting the segment of the formula (1a) and $Ar^1$ to $Ar^3$ constituting the segment of the formula (2a), $Ar^7$ and/or $Ar^8$ in the structural unit constituting the segment of the formula (3a), or $Ar^9$ in the structural unit constituting the segment of the formula (4a) has at least one acidic group in the aromatic ring constituting the main chain. As the acidic group, a sulfonic acid group is more preferable, as described above.

$Ar^{11}$ to $Ar^{19}$ in the formula (1b) to (4b) each represent a divalent aromatic group. Examples of the divalent aromatic group include divalent monocyclic aromatic groups such as 1,3-phenylene and 1,4-phenylene, divalent condensed ring type aromatic groups such as 1,3-naphthalenediyl, 1,4-naphthalenediyl, 1,5-naphthalenediyl, 1,6-naphthalenediyl, 1,7-naphthalenediyl, 2,6-naphthaienecliyl and 2,7-naphthalenediyl, and heteroaromatic groups such as pyridinediyl, quinoxalinediyl and thiophenediyl. Preferred are divalent monocyclic aromatic groups.

Furthermore, these divalent aromatic groups may have substituents, and description of these substituents is the same as that of $Ar^1$ to $Ar^9$ above.

As the component (A) of the present invention, as long as within a range for obtaining a polymer electrolyte membrane having a microphase-separated structure described below, any one of a block copolymer and a graft copolymer, or a combination thereof may be used. However, in consideration of ease of preparation, a block copolymer is preferable. Examples of the combination of the segments in the more preferable block copolymer include those as shown in Table 1 below, and among those, <b>, <c>, <d>, <g>, or <h> is preferable, and <g> or <h> is particularly preferable.

Table 1

| Block copolymer | Ionic segment | Non-ionic segment |
|---|---|---|
| <a> | Formula (1a) | Formula (1b) |
| <b> | Formula (1a) | Formula (2b) |
| <c> | Formula (2a) | Formula (1b) |
| <d> | Formula (2a) | Formula (2b) |
| <e> | Formula (3a) | Formula (1b) |
| <f> | Formula (3a) | Formula (2b) |
| <g> | Formula (4a) | Formula (1b) |
| <h> | Formula (4a) | Formula (2b) |

Furthermore, for the block copolymers, the number m of the repeating structural units of the ion segments represented by the formulae (1a) to (4a), and the number n of the repeating structural units of the ion segments represented by any one of the formulae (1b) to (4b) both represent 5 or more, preferably in the range from 5 to 1000, and more preferably in the range from 10 to 500. The polymer electrolyte having the number of the repeating structural units within the above range is excellent in the balance between the ion conductivity (proton conductivity) and the mechanical strength and/or water resistance, and thus allows easy preparation of each segment, which is thus preferable.

Specifically, examples of the preferable block copolymer include the followings:

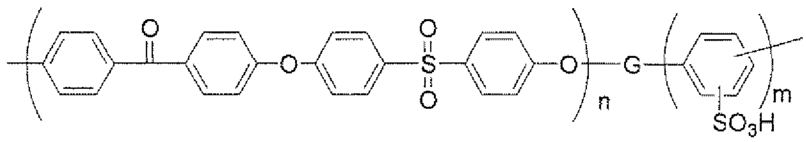

(1)

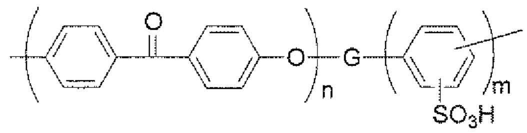

(2)

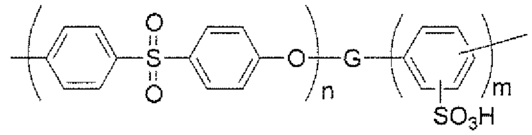

(3)

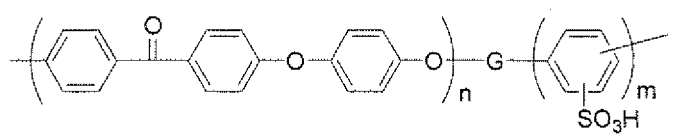

(4)

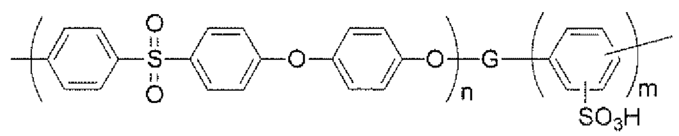

(5)

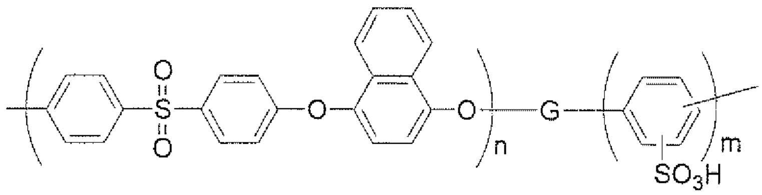

(6)

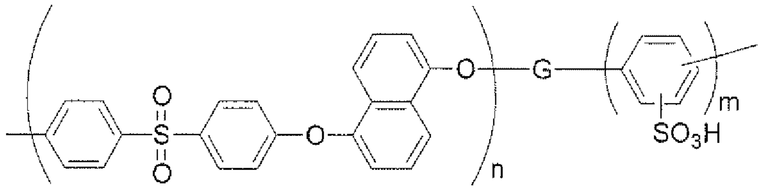

(7)

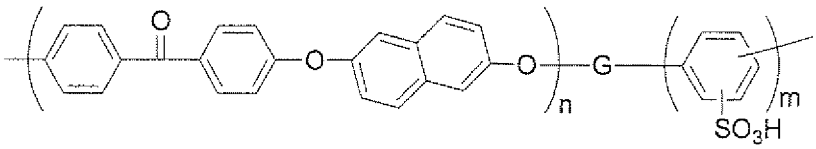

(8)

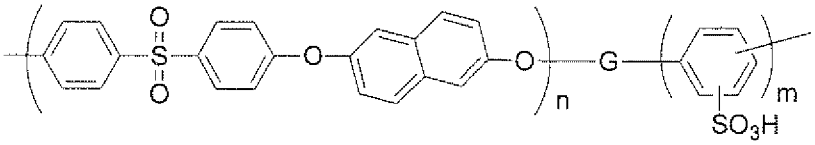

(9)

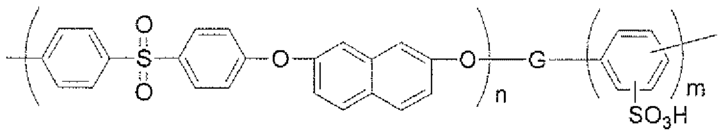

(10)

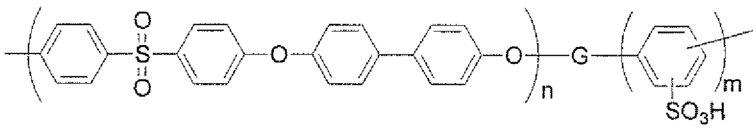

(11)

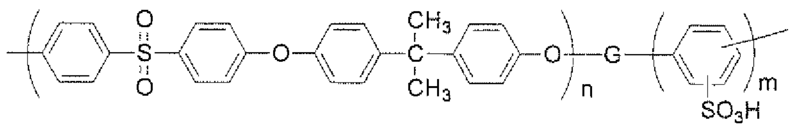

(12)

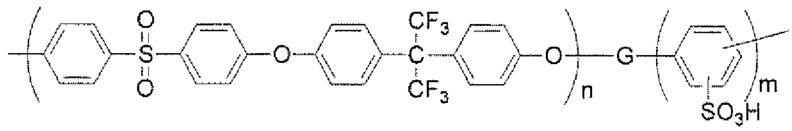

(13)

Further, the above-mentioned (1) to (13) have blocks including the structural units in parenthesis, the copolymerization fashion is a block copolymerization, and G represents a bond, atom, or divalent atom group linking two blocks. Specifically, examples of the G include a direct bond, a sulfonyl group, a carbonyl group, an oxygen atom, a sulfur atom, a divalent aromatic group, or a divalent group formed from a combination thereof.

As the more preferable block copolymer-type polymer electrolyte, for example, among the above-exemplified ones, the block copolymer-type polymer electrolytes of (3), (5), and (9) to (13) are preferable, and (3), (5), (9), (10), (11), and (12) are particularly preferable.

Also, the molecular weight of the polymer electrolyte is preferably from 5000 to 1000000, and particularly preferably from 15000 to 400000, as expressed by the polystyrene-referenced number average molecular weight.

Examples of the polymer electrolyte include the block copolymers obtained in accordance with the publications of JP-2005-126684-A and JP-2005-139432-A, and the block copolymers as disclosed by the present applicant in JP-2007-177197-A.

The polymer electrolyte membrane obtained from the polymer electrolyte of the block copolymer above easily forms a microphase-separated structure including a phase in which the density of the ionic segment is higher than that of the non-ionic segment (hereinafter sometimes referred to as the "hydrophilic segment phase") and a phase in which the density of the non-ionic segment is higher than that of the ionic segment (hereinafter sometimes referred to as the "hydrophobic segment phase"). In the polymer electrolyte membrane having such a microphase-separated structure, the hydrophilic segment phase can exhibit excellent proton conductivity and the hydrophobic segment phase can improve the mechanical strength and the like, and therefore, a polymer electrolyte membrane in which the hydrophilic segment phase and the hydrophobic segment phase form a microphase-separated structure is particularly preferable for the present invention.

<Polymer Electrolyte Membrane>

Next, a method for forming polymer electrolyte membranes from the polymer electrolyte compositions of the first to third embodiments of the present invention as described above will be described. As the membrane-forming method, a method for forming a membrane from the solution state (so-called solution cast method) is particularly preferably used. In addiction, in the following description, the second embodiment of the present invention will be described as an example.

First, the component (A) and the component (B2) are dissolved in a suitable solvent, if necessary, together with other components such as polymers, and additives, in addition to the polymer electrolyte, to obtain a polymer electrolyte solution. Next, this polymer electrolyte solution is cast-applied (membrane formation by a cast method) on a supporting substrate such as a glass substrate and a PET (polyethylene terephthalate) film to form a polymer electrolyte membrane on the supporting substrate by removing the solution. Then, by removing the supporting substrate by peeling or the like, a polymer electrolyte membrane is prepared.

Further, examples of the additive include a plasticizer, a stabilizer, and a releasing agent, which are each used for common polymers, and inorganic or organic particles, which are added as a water retaining agent.

The solvent used for forming the a membrane is not particularly limited as long as the component (A) and the component (B2), and if necessary, other components added can be dissolved therein and then be removed therefrom, and polar aprotic solvents such as dimethyl formamide (DMF), dimethylacetamide (DMAc), N-methyl-2-pyrrolidone (NMP) and dimethyl sulfoxide (DMSO), or chlorine-based solvents such as dichloromethane, chloroform, 1,2-dichloroethane, chlorobenzene and dichlorobenzene, alcohols such as methanol, ethanol and propanol, alkylene glycol monoalkyl ethers such as ethyleneglycol monomethyl ether, ethyleneglycol monoethyl ether, propylene glycol monomethyl ether and propylene glycol monoethyl ether are preferably used. These may be used singly, or in a mixture of two or more kinds thereof. Among those, DMSO, DMF, DMAc, NMP, or the like is preferably used since it has high solubility of the polymer electrolyte therein.

The thickness of the polymer electrolyte membrane thus obtained is not particularly limited, but from the practical point, the thickness is preferably from 5 to 300 $\mu$m. If the membrane thickness is 5 $\mu$m or more, a polymer electrolyte membrane having superior practical strength is obtained, which is thus preferable, whereas if the membrane thickness is 300 $\mu$m or less, a polymer electrolyte membrane tends to have reduction in the membrane resistance itself, which is thus preferable. The membrane thickness can be controlled by the concentration of the polymer electrolyte in the polymer electrolyte solution or the coating thickness of the membrane on the supporting substrate.

The polymer electrolyte membrane obtained from the polymer electrolyte composition of the present invention preferably has a microphase-separated structure including a hydrophilic segment phase and a hydrophobic segment phase as described above, and such a polymer electrolyte membrane of the microphase-separated structure exhibits extremely excellent ion conductivity and good radical resistance by the action of the component (B2), whereby the long-term stability of the fuel cell can be attained. As a result of the investigations conducted by the present inventors, it was proved that for the nicrophase-separated structure, the peroxide component generated by the operation of the fuel cell deteriorates a segment having an acidic group mainly constituting the hydrophilic segment phase, and consequently, deteriorates the polymer electrolyte membrane itself over time. The polymer electrolyte composition in the second embodiment of the present invention can significantly improve the radical resistance of the polymer electrolyte membrane, particularly the radical resistance of the hydrophilic segment phase. Further, when a block copolymer or graft copolymer

having an ionic segment and a non-ionic segment as the component (A) is used, for example, the decomposition degree of the hydrophilic segment can be determined by selectively decomposing the non-ionic segment with the use of an agent (decomposing agent) capable of discomposing the non-ionic segment while not decomposing the ionic segment, and then analyzing the molecular weight of the decomposed product including mainly ionic segment of the residue by means of GPC (Gel Permeation Chromatography) analysis or the like. Since the preferable block copolymers (1) to (13) as exemplified above have a polyether-based polymer segment as a non-ionic segment and a polyphenylene-based polymer segment as an ionic segment, as the decomposing agent capable of selectively decomposing the polyether-based polymer segment, quaternary ammonium hydroxide can be applied. It is preferable that this quaternary ammonium hydroxide be used as a decomposing agent (solution of quaternary ammonium hydroxide in a lower alcohol) after being dissolved in a lower alcohol such as methanol and ethanol. In addition, by an operation in which a block copolymerization-type polymer electrolyte is added to the solution of quaternary ammonium hydroxide in the lower alcohol and warmed at a reaction temperature of about 100°C for a predetermined time, a decomposition product including ionic segments is obtained and then the molecular weight of the decomposition product is measured. Further, the reaction time for the decomposition of the polymer electrolyte can be determined in the following manner. That is, the reaction liquid during the decomposition reaction is appropriately sampled, and then the reduction degree of the molecular weights of the high molecular weight component is determined. Here, a point of time when the degree is almost saturated may be an end point. As such, the reaction time can be appropriately adjusted, and so as to complete the decomposition reaction usually within 0.5 to 3 hours, the reaction time, the reaction temperature, and the amount of the decomposing agent to be used can be adjusted.

When observed by a transmission electron microscope (TEM), for example, the microphase-separated structure as described above refers to a structure such that a hydrophilic segment phase (microdomain) and a hydrophobic segment phase (microdomain) co-exist, and the domain width, namely, the identity period of each of the microdomain structures is several run to several hundreds of nm. Preferable examples thereof include ones having a microdomain structure of 5 nm to 100 nm. Further, according to an analysis means by means of TEM, it can be easily confirmed that the polymer electrolyte membrane has a microphase-separated structure, and as a result, the microphase-separated structure can be exhibited to optimize the blending amounts of the component (A) and the component (B2)

In addition, in order to further improve the strength, flexibility, or durability of the polymer electrolyte membrane prepared from the polymer electrolyte composition, the polymer electrolyte composition can be impregnated in a porous base material to make a composite, thereby obtaining a composite membrane. The method to make the composite can employ a known method.

The porous base material is not particularly limited as long as it satisfies the purpose of use as described above, and examples thereof include a porous membrane, a woven fabric, a non-woven fabric, a fibril, and the like, which can be used without consideration of the shape or the materials. The material for the porous base material preferably includes an aliphatic polymer, an aromatic polymer, or a fluorine-containing polymer, from the viewpoint of the heat resistance or in consideration of the effect of reinforcing the physical strength.

In the case of obtaining a composite membrane, the membrane thickness of the porous base material is preferably from to 100 μm, more preferably from 3 to 30 μm, and particularly preferably from 5 to 20 μm, the pore diameter of the porous substrate is preferably from 0.01 to 100 μm, and more preferably from 0.02 to 10 μm, and the porosity of the porous substrate is preferably from 20 to 98%, and more preferably from 40 to 95%.

If the membrane thickness of the porous base material is 1 μm or more, the effect of reinforcing the strength after making a composite, or the reinforcing effect of imparting flexibility or durability is superior, and as a result, gas leakage (cross leakage) scarcely occurs. In addition, if the membrane thickness is 100 μm or less, the electric resistance is decreased, whereby the obtained composite membrane becomes more excellent as an ion conductive membrane of a solid polymer fuel cell. If the pore diameter is 0.01 μm or more, it becomes easier to fill the copolymers of the present invention, whereas if the pore diameter is 100 μm or less, the reinforcing effect for the copolymer is increased. If the porosity is 20% or more, the resistance of the ion conductivity is decreased, whereas if the porosity is 98% or less, the strength of the porous substrate itself is increased, thereby leading to improvement of the reinforcing effect, which is thus preferable.

Moreover, in the case of such a composite membrane, by the observation of a portion where the polymer electrolyte membrane of the composite membrane is formed by means of an analysis means by TEM, it may be confirmed that the microphase-separated structure be formed in the portion.

The polymer electrolyte membrane or composite membrane prepared from the polymer electrolyte composition of the second embodiment of the present invention has been described above, but if the component (B2) is replaced with the component (B1) in the description, a polymer electrolyte membrane or composite membrane can also be prepared from the polymer electrolyte composition of the first embodiment of the present invention. Similarly, if the component (B2) is replaced with a mixture of the component (B2) and the component (B1), a polymer electrolyte membrane or composite membrane can also be prepared from the polymer electrolyte composition of the third embodiment of the present invention.

<Fuel Cell>

Next, a fuel cell formed by using the polymer electrolyte compositions of the first to third embodiments of the present invention will be described. In the following description, these are collectively referred to as the "polymer electrolyte composition of the present invention".

The fuel cell of the present invention can be prepared by joining a catalyst and a conductive substance as a current collector to both sides of the polymer electrolyte membrane (or composite membrane) formed by using the polymer electrolyte composition of the present invention.

Herein, the catalyst is not particularly limited as long as it is capable of activating a redox reaction of hydrogen or oxygen, and a known catalyst can be employed. However, fine particles of platinum or platinum-based alloys are preferably used as a catalyst. Also, the fine particles of platinum or platinum-based alloys may be often used while being supported on particulate or fibrous carbon such as activated carbon and graphite.

Furthermore, a catalyst layer can be obtained by mixing platinum or platinum-based alloys supported on carbon with a solvent of a perfluoroalkyl sulfonic acid resin to give a paste (catalyst ink), which is applied on a gas diffusion layer and dried to obtain a catalyst layer integrated with the gas diffusion layer laminated thereon. The obtained catalyst layer can be assembled with the polymer electrolyte membrane to obtain a membrane-electrode assembly for a fuel cell. As a specific method, for example, a known method such as a method described in J. Electrochem. Soc.: Electrochemical Science and Technology, 1988, 135 (9), 2209, and the like can be used. Further, the catalyst ink can be applied on the polymer electrolyte membrane or polymer electrolyte composite membrane and dried to form a catalyst layer directly on the surface of the membrane, thereby obtain a membrane-electrode assembly for a fuel cell.

Here, a catalyst composition can be formed by using the polymer electrolyte composition of the present invention instead of a perfluoroalkyl sulfonic acid resin as a polymer electrolyte used for a catalyst layer. A catalyst layer obtained by using this catalyst composition is preferable as a catalyst layer since it can exhibit good long-term stability without significantly interfering with the characteristics of the polymer electrolyte of the component (A), as the above polymer electrolyte membrane.

For the conductive substance as a current collector, known materials can be used, but porous carbon woven fabric, carbon non-woven fabric, or carbon paper is preferable so as to transport a raw material gas efficiently to the catalyst.

The fuel cell of the present invention prepared in this manner can be used in various modes using hydrogen gas, modified hydrogen gas, or methanol as a fuel.

The fuel cell thus obtained is extremely useful from an industrial view since it provides excellent long-term stability.

Hereinbelow, the present invention will be described with reference to Examples, but the present invention is not limited to these Examples.

Reference Examples 1 to 5

As the component (B1) satisfying the platinum affinity of the present invention, phenothiazine represented by the following structural formula:

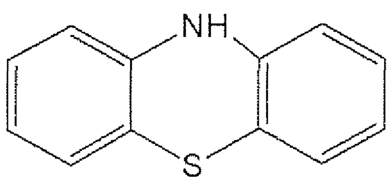

,

1,8-bis(2-pyridyl)-3,6-dithiaoctane represented by the following structural formula:

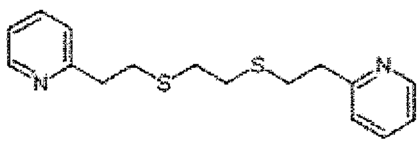

,

and
tri(2-thienyl)phosphine represented by the following structural formula:

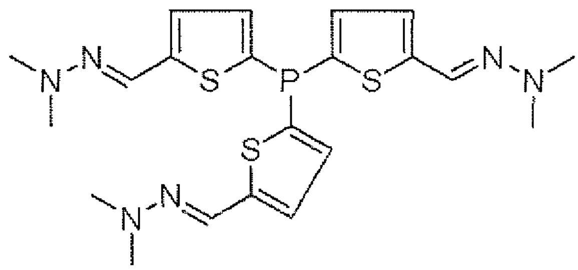

were measured for its platinum affinity.
Furthermore, as the compounds used in Comparative Examples for the component (B 1),
**[0097]** Viosorb 04770 (amine-based antioxidant, manufactured by Kyodo Yakuhin Co., Ltd.) represented by the following structural formula:

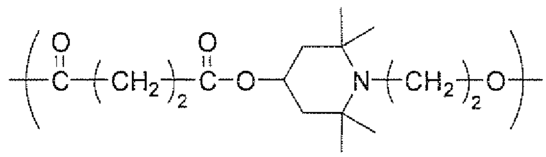

,

and
Cyanox 1790 (phenolic antioxidant, manufactured by Cytec Co., Ltd.) represented by the following structural formula:

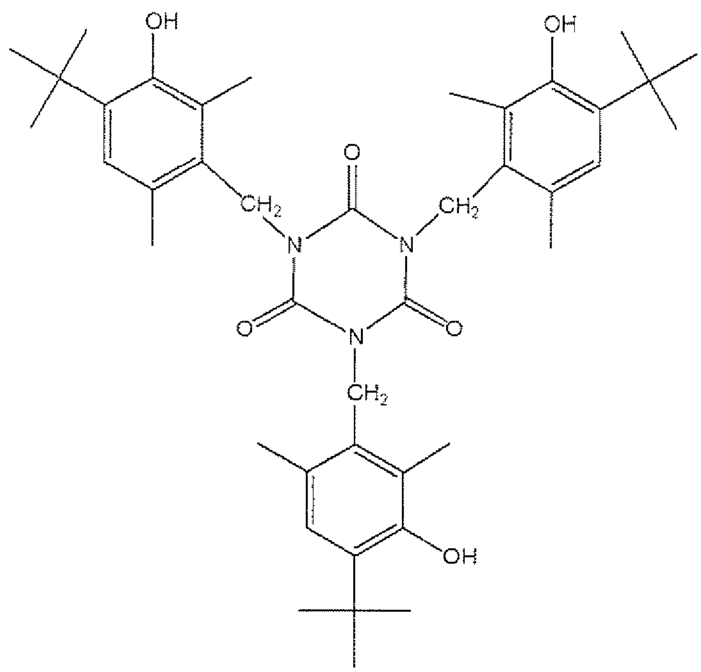

were measured for its platinum affinity.
The platinum affinity was measured in the following manner. 10 mg of a compound to be measured [component (B1)] was added into a 10-ml glass screw bin, and subsequently, 5 ml of a 100-fold diluted solution of a commercially

available platinum standard solution for atomic absorption (manufactured by Wako Pure Chemical Industries Ltd., concentration: 1000 ppm, present in the form of $H_2Pt(Cl)_6$) is added thereto. After mixing the component (B) and the platinum standard solution by shaking, the mixture was left to stand for 2 hours, and the supernatant was recollected and measured for its platinum concentration with an ICP light emitting device. Further, the platinum affinity was determined from the platinum concentrations before and after the addition of the compound to be measured. The results are shown in Table 2. The phenothiazine had a platinum affinity of 50%, the 1,8-bis(2-pyridyl)-3,6-dithiaoctane had a platinum affinity of 11%, and the tri(2-thienyl)phosphine had a platinum affinity of 32%, from which the affinity for platinum was recognized. On the other hand, while their affinity for platinum was recognized, Viosorb 04770 and Cyanox 1790 had a degree of affinity for platinum of about 1%, from which the affinity for platinum could be said to be extremely low.

Table 2

| | Component (B) | Before addition of component (B) | After addition of component (B) | Platinum affinity |
|---|---|---|---|---|
| Reference Example 1 | Phenothiazine | 10.0 ppm | 5.0 ppm | 50% |
| Reference Example 2 | 1,8-Bis(2-pyridyl)-3,6-dithiaoctane | 10.0 ppm | 8.9 ppm | 11% |
| Reference Example 3 | Tri(2-thienyl) phosphine | 10.0 ppm | 6.8 ppm | 32% |
| Reference Example 4 | Viosorb 04770 | 10.0 ppm | 9.9 ppm | 1% |
| Reference Example 5 | Cyanox 1790 | 10.0 ppm | 9.9 ppm | 1% |

Example 1

As the polymer electrolyte of the component (A), a block copolymer 1 (ion exchange capacity=2.50 meq/g, Mw=340,000, Mn=160,000) having sulfonic acid group-containing segments (ionic segments) including the repeating units represented by the following formula:

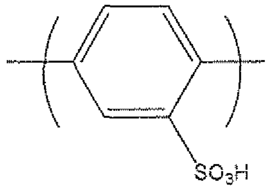
,

which had been prepared using SUMIKA EXCEL PES 5200 P (manufactured by Sumitomo Chemical Co., Ltd., Mw=73,000) with reference to the method described in JP-2007-284653-A, and
non-ionic segments represented by the following formula:

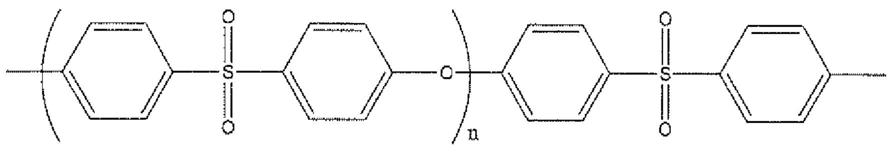

was used. With this block copolymer 1, the above-described phenothiazine was dissolved in dimethyl sulfoxide at a concentration of about 8.5% by weight (weight ratio of block copolymer 1/phenothiazine=95% by weight/5% by weight), to prepare a polymer electrolyte solution. Then, this polymer electrolyte solution was uniformly spread-applied onto a PET substrate. After the application, the polymer electrolyte solution was dried at 80°C at normal pressure. Then, the

obtained membrane was immersed and washed in 2 N sulfuric acid, washed with ion-exchange water, further dried at normal temperature, and then peeled from the PET substrate to obtain a polymer electrolyte membrane 1.

(Preparation of Catalyst Ink)

1.00 g of platinum-supported carbon in which platinum was supported on carbon (SA50BK. manufactured by N.-E. CHEMCAT, platinum content; 50% by weight) was introduced to 11.4 mL of a commercially available 5% by weight NAFION solution (solvent: a mixture of water and lower alcohol), to which 50.20 g of ethanol and 7.04 g of water were added. The obtained mixture was subjected to an ultrasonic treatment for 1 hour and then stirred for 5 hours with a stirrer to obtain a catalyst ink.

(Preparation of Membrane-Electrode Assembly)

Next, the above-described catalyst ink was applied on a 5.2 cm square area in the center on one side of the polymer electrolyte membrane obtained by the above-described preparation method by a spraying method. At this time, the distance from the discharge portion to the membrane was set to 6 cm and the stage temperature was set to 75°C. By the same method, overcoating was carried out eight times, and then left to stand for 15 minutes on the stage to remove the solvent, thereby forming an anode catalyst layer. The obtained anode catalyst layer contains platinum at 0.6 $mg/cm^2$, as determined from the composition and the coating weight. Subsequently, the catalyst ink was applied similarly on the opposite side to the anode catalyst layer of the polymer electrolyte membrane to form a cathode catalyst layer containing platinum at 0.6 $mg/cm^2$. As a result, a membrane-electrode assembly was obtained.

(Preparation of Fuel Cell)

A commercially available JARI standard cell was used to prepare a fuel cell. Specifically, carbon cloth as a gas diffusion layer, separators made of carbon with gas passageway grooves cut therein were arranged in this order on both sides of the above-described membrane-electrode assembly, and a current collector and an end plate were arrange in that order on the outer side. They were clamped with a bolt to assemble a fuel cell with an effective electrode area of 25 $cm^2$.

(Evaluation of Characterization of Fuel Cell [Load Variation Test])

The obtained fuel cell was kept at 80°C while slightly humidified hydrogen (70 mL/min, back pressure: 0.1 MPaG) and air (174 mL/min, back pressure: 0.05 MPaG) were each introduced into the cells for a load variation test with an open circuit and a constant current. The fuel cell was operated continuously for 200 hours under these conditions, and then the membrane-electrode assembly was taken out and placed in a mixed solution of ethanol/water, and a catalyst layer was also removed by an ultrasonic treatment. Further, the molecular weight of the hydrophilic segment of the remaining polymer electrolyte membrane was measured in the following manner. That is, 8 ml of dimethyl sulfoxide was added to 4 mg of the polyarylene-based block copolymer in the membrane and dissolved therein, and was allowed to undergo a reaction with 10 μL of a 25 % methanol solution of tetramethylammonium hydroxide at 100°C for 2 hours. After standing to cool, the molecular weight of the obtained solution was measured by gel permeation chromatography (GPC). The maintenance ratio of the weight-average molecular weight of the hydrophilic segment before and after the load variation tests, and the maintenance ratio of the weight-average molecular weights of the polymer electrolyte membrane before and after the load variation tests are shown in Table 3. A higher maintenance ratio indicates smaller deterioration of the polymer electrolyte membrane. The measuring conditions for GPC were as follows.

- Column: one TSKgel GMHHHR-M manufactured by Tosoh Corp.
- Column temperature: 40°C
- Mobile phase solvent: N,N-dimethylformamide (with addition of LiBr to 10 $mmol/dm^3$)
- Solvent flow rate: 0.5 mL/min

(Method for analyzing the amount of platinum present on the polymer electrolyte membrane before and after the load variation test)

The membrane-electrode assemblies before and after the load variation test were cut to a size of 1.25 cm× 1.25 cm, and the surface of the membrane-electrode assembly was scraped with a cotton swab to which a mixed solvent of ethanol/water applied to remove the catalyst layer. The remaining polymer electrolyte membrane was put into a beaker, 10 ml of aqua regia was added thereto, and the mixture was heated with a hot plate at 80°C to dissolve platinum present in the polymer electrolyte membrane. After standing to be cooled, a constant volume was quantified in a 20-ml

volumetric flask, and the concentration of platinum was measured by an ICP light-emitting device (SPS3000, manufactured by SII). The amounts of platinum present in the polymer electrolyte membrane before and after the load variation test, and the increase amount of platinum in the polymer electrolyte membrane between before and after the load variation test are shown in Table 4.

Comparative Example 1

For preparation of the polymer electrolyte membrane, a fuel cell was assembled by the same method as in Example 1 except that phenothiazine was not added, and then subjected to a load variation test. The molecular weights of the hydrophilic segment before and after the load variation test, and the maintenance ratios of the molecular weights of the polymer electrolyte membrane before and after the load variation test are shown in Table 3. In addition, the amounts of platinum present in the polymer electrolyte membrane before and after the load variation test, and the increase amount of platinum in the polymer electrolyte membrane between before and after the load variation test are shown in Table 4.

Comparative Example 2

For preparation of the polymer electrolyte membrane, a fuel cell was assembled by the same method as in Example 1 except that Viosorb 04770 that is an amine-based antioxidant was used instead of phenothiazine, and then subjected to a load variation test. The molecular weights of the hydrophilic segment before and after the load variation test, and the maintenance ratios of the molecular weights of the polymer electrolyte membrane before and after the load variation test are shown in Table 3. In addition, the amounts of platinum present in the polymer electrolyte membrane before and after the load variation test, and the increase amount of platinum in the polymer electrolyte membrane between before and after the load variation test are shown in Table 4.

Comparative Example 3

For preparation of the polymer electrolyte membrane, a fuel cell was assembled by the same method as in Example 1 except that Cyanox 1790 that is a phenolic antioxidant was used instead ofphenothiazine, and then subjected to a load variation test. The molecular weights of the hydrophilic segment before and after the load variation test, and the maintenance ratios of the molecular weights of the polymer electrolyte membrane before and after the load variation test are shown in Table 3. In addition, the amounts of platinum present in the polymer electrolyte membrane before and after the load variation test, and the increase amount of platinum in the polymer electrolyte membrane between before and after the load variation test are shown in Table 4.

Table 3

| | Component (B) | Before load variation test | After load variation test | Maintenance ratio of molecular weight |
|---|---|---|---|---|
| Example 1 | Phenothiazine | $1.63\times10^5$ | $1.62\times10^5$ | 99% |
| Comparative Example 1 | None | $1.64\times10^5$ | $9.16\times10^4$ | 56% |
| Comparative Example 2 | Viosorb 04770 | $1.60\times10^5$ | $8.99\times10^4$ | 56% |
| Comparative Example 3 | Cyanox 1790 | $1.61\times10^5$ | $7.49\times10^4$ | 47% |

Table 4

| | Component (B) | Before load variation test | After load variation test | Increase amount |
|---|---|---|---|---|
| Example 1 | Phenothiazine | 4.0 $\mu g/cm^2$ | 5.2 $\mu g/cm^2$ | 1.2 $\mu g/cm^2$ |
| Comparative Example 1 | None | 4.0 $\mu g/cm^2$ | 8.4 $\mu g/cm^2$ | 4.4 $\mu g/cm^2$ |

(continued)

| | Component (B) | Before load variation test | After load variation test | Increase amount |
|---|---|---|---|---|
| Comparative Example 2 | Viosorb 04770 | 3.2 $\mu g/cm^2$ | 9.2 $\mu g/cm^2$ | 6.0 $\mu g/cm^2$ |
| Comparative Example 3 | Cyanox 1790 | 3.2 $\mu g/cm^2$ | 10.4 $\mu g/cm^2$ | 7.6 $\mu g/cm^2$ |

The component (B1) of the present invention, that is, the polymer electrolyte membrane prepared using phenothiazine having a high platinum affinity as described above had sufficient maintenance of the molecular weights of the ionic segment before and after the load variation test, and thus it was proved that the polymer electrolyte membrane has excellent long-term stability.

On the other hand, in the cases of using Viosorb 04770 or Cyanox 1790 having a platinum affinity of about 1% (Comparative Examples 2 and 3) and in the cases of not using the component (B) (Comparative Example 1), the maintenance ratio of the molecular weight of the ionic segment was lowered up to 47 to 56%, which indicates low long-term stability.

In addition, the amounts of platinum penetrating into the polymer electrolyte membrane were investigated (Table 4), and as a result, it was proved that in the polymer electrolyte membrane of Example 1, the penetration amount of platinum was extremely low and the penetration of platinum was well-inhibited.

Examples 2 to 3

For preparation of the polymer electrolyte membrane, if a fuel cell is assembled by the same method as in Example 1 except that 1,8-bis(2-pyridyl)-3,6-dithiaoctane or tri(2-thienyl)phosphine is used instead of phenothiazine, and then subjected to a load variation test, since the platinum affinities of the components (B1) are all 10% or more, also before and after the load variation test, the molecular weight of the ionic segment would be sufficiently maintained, and a polymer electrolyte membrane having excellent long-term stability could be obtained. The reason for this is that such a polymer electrolyte membrane inhibits penetration of platinum well.

Example 4

SUMIKA EXCEL PES 3600 P (manufactured by Sumitomo Chemical Co., Ltd., Mw=46,000) was used instead of SUMIKA EXCEL PES 5200 P (manufactured by Sumitomo Chemical Co., Ltd., Mw=73,000) as the polymer electrolyte of a component (A) to synthesize a block copolymer 2 (ion exchange capacity=2.60 meq/g, Mw=250,000, Mn=120,000), and a fuel cell was assembled by the same method as in Example 1 except that this block copolymer 2 was used instead of the block copolymer 1, and then subjected to a load variation test. The weight-average molecular weights of the hydrophilic segment before and after the load variation test, and the maintenance ratios of the weight-average molecular weights of the polymer electrolyte membrane before and after the load variation test are shown in Table 5. In addition, the amounts of platinum present in the polymer electrolyte membrane before and after the load variation test, and the increase amount of platinum in the polymer electrolyte membrane between before and after the load variation test are shown in Table 6.

Comparative Example 4

For preparation of the polymer electrolyte membrane, a fuel cell was assembled by the same method as in Example 2 except that phenothiazine was not added, and then subjected to a load variation test. The molecular weights of the hydrophilic segment before and after the load variation test, and the maintenance ratios of the molecular weights of the polymer electrolyte membrane before and after the load variation test are shown in Table 5. In addition, the amounts of platinum present in the polymer electrolyte membrane before and after the load variation test, and the increase amount of platinum in the polymer electrolyte membrane between before and after the load variation test are shown in Table 6.

Table 5

| | Component (B) | Before load variation test | After load variation test | Maintenance ratio of molecular weight |
|---|---|---|---|---|
| Example 4 | Phenothiazine | $9.87\times10^4$ | $9.42\times10^4$ | 95% |
| Comparative Example 4 | None | $9.77\times10^4$ | $6.73\times10^4$ | 69% |

Table 6

| | Component (B) | Before load variation test | After load variation test | Increase amount of platinum |
|---|---|---|---|---|
| Example 4 | Phenothiazine | 3.2 $\mu g/cm^2$ | 4.8 $\mu g/cm^2$ | 1.6 $\mu g/cm^2$ |
| Comparative Example 4 | None | 3.2 $\mu g/cm^2$ | 6.0 $\mu g/cm^2$ | 2.8 $\mu g/cm^2$ |

From the results of Example 4 and Comparative Example 4, it was proved that even when the polymer electrolyte was changed, phenothiazine made the radical resistance good.

In addition, the amounts of platinum penetrating into the polymer electrolyte membrane were investigated (Table 6), and as a result, it was proved that in the polymer electrolyte membrane of Example 2, the penetration amount of platinum was extremely low and the penetration of platinum was well-inhibited.

Example 5

For the polymer electrolyte membrane prepared in Example 1, the radical resistance was evaluated under the test conditions as below. The results are shown in Table 7.

(Radical Resistance Evaluation 1)

An aqueous ferrous chloride solution obtained by dissolving ferrous chloride in 3% hydrogen peroxide to be an iron ion concentration of 8 ppm was prepared. The polymer electrolyte membrane was introduced to the aqueous ferrous chloride solution, and its temperature was maintained as it was at 60°C for 2 hours. Thereafter, the polymer electrolyte membrane was taken out, the moisture adhered thereto was sufficiently wiped off, and the weight of the membrane was measured. Then, the radical resistance was evaluated by determining the weight change ratios before and after the immersion in the aqueous ferrous chloride solution. Further, the weight maintenance ratio (%) is expressed as (a value produced by dividing the weight of the polymer electrolyte membrane after immersion with the weight of the polymer electrolyte membrane before immersion)$\times$100 (%).

Comparative Example 5

For preparation of the polymer electrolyte membrane, the radical resistance was evaluated by the same method as in Example 5 except that phenothiazine was not used. The results are shown in Table 7.

Table 7

| | Component (B2) | Weight maintenance ratio |
|---|---|---|
| Example 5 | Phenothiazine | 38% |
| Comparative Example 5 | None | 1% |

It was proved that the polymer electrolyte membrane of Comparative Example 5 in which phenothiazine was not used as the component (B2) was almost decomposed by the peroxide components or the like produced in the aqueous ferrous chloride solution. On the contrary, it was also proved that the polymer electrolyte membrane of Example 5 in which phenothiazine was used as the component (B2) maintained the weight even in the aqueous ferrous chloride solution which causes extreme easiness of generation of the peroxide components at a weight maintenance ratio of

about 40%, and had excellent radical resistance.

Example 6

For the preparation of the polymer electrolyte membrane, a polymer electrolyte membrane was prepared by the same method as in Example 1 except that Irganox 565 was used instead of phenothiazine. For this polymer electrolyte membrane, the radical resistance was evaluated under gentler conditions than those in Example 5 (Radical Resistance Evaluation 1). Specifically, the test conditions are as follows. The results are shown in Table 8. Further, this Irganox 565 (manufactured by Ciba Specialty Chemicals) contains sulfur atoms and nitrogen atoms in the molecule as shown in the following structural formula:

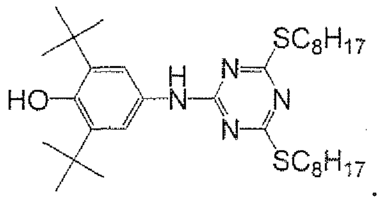

(Radical Resistance Evaluation 2)

An aqueous ferrous chloride solution obtained by dissolving ferrous chloride in 3% hydrogen peroxide to be an iron ion concentration of 4 ppm was prepared. The polymer electrolyte membrane was introduced to the aqueous ferrous chloride solution, and its temperature was maintained as it was at 60°C for 2 hours. Thereafter, the polymer electrolyte membrane was taken out, the moisture adhered thereto was sufficiently wiped off, and the weight of the membrane was measured. Then, the radical resistance was evaluated by determining the weight change ratios before and after the immersion in the aqueous ferrous chloride solution. Further, the weight maintenance ratio (%) is expressed as (a value produced by dividing the weight of the polymer electrolyte membrane after immersion with the weight of the polymer electrolyte membrane before immersion)$\times$100 (%).

Comparative Example 6

For the polymer electrolyte membrane used in Comparative Example 5, the radical resistance was evaluated as in Example 6. The weight maintenance ratios are shown in Table 8.

Table 8

| | Component (B) | Weight maintenance ratio |
|---|---|---|
| Example 6 | Irganox 565 | 99% |
| Comparative Example 6 | None | 83% |

It was proved that even in the case where Irganox 565 was used as the component (B2), the radical resistance was improved, as compared with a case where it was not used.

Industrial Applicability

By using the polymer electrolyte composition of the present invention, a member for a fuel cell, such as a polymer electrolyte membrane, which is capable of realizing a fuel cell having good long-term stability can be obtained. The fuel cell provided with the member for a fuel cell had extremely excellent long-term stability, and therefore, it is extremely useful in terms of an industrial view.

**Claims**

**1.** A polymer electrolyte composition comprising

a component (A) defined below, and
at least one kind of component (B) selected from the group consisting of a component (B1) defined below and a component (B2) defined below:

(A) a polymer electrolyte;
(B1) a compound having a degree of affinity for platinum of 10% or more; and
(B2) a compound having at least two kinds of atoms having an unshared electron pair, selected from the group consisting of a nitrogen atom, a phosphorus atom, and a sulfur atom in the molecule.

**2.** The polymer electrolyte composition according to claim 1, wherein the component (B) is the component (B2).

**3.** The polymer electrolyte composition according to claim 1, wherein the component (B2) is a compound having a thio group or a mercapto group as a functional group including a sulfur atom and further having an amino group or an imino group as a functional group including a nitrogen atom.

**4.** The polymer electrolyte composition according to claim 1, wherein the component (B2) is a compound having a heterocycle including at least one of the atoms having an unshared electron pair.

**5.** The polymer electrolyte composition according to claim 1, wherein the component (B) is the component (B1).

**6.** The polymer electrolyte composition according to claim 1, wherein the component (B) is a phenothiazine represented by the following formula (10):

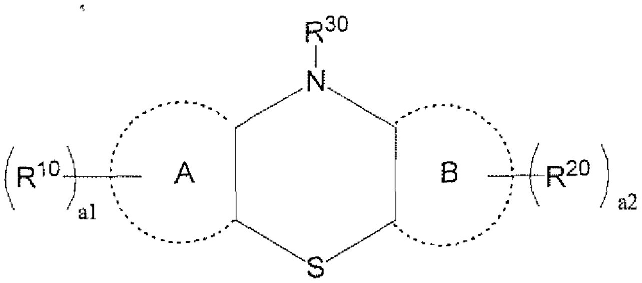 (10)

wherein Ring A and Ring B, which are the same or different, each represent a benzene ring or a naphthalene ring; $R^{10}$ attached to Ring A and $R^{20}$ attached to Ring B each represent an alkyl group having 1 to 10 carbon atoms, a halogenated alkyl group having 1 to 10 carbon atoms, an alkoxy group having 1 to 10 carbon atoms, an alkylthio group having 1 to 10 carbon atoms, an aryl group having 6 to 10 carbon atoms, or a halogen atom; a1 and a2, which are the same or different, each represent an integer of 0 to 2; when a1 is 2, the two $R^{10}$ may be the same or different, and when a2 is 2, the two $R^{20}$ may be the same or different; and $R^{30}$ represents a hydrogen atom, an alkyl group having 1 to 10 carbon atoms, a halogenated alkyl group having I to 10 carbon atoms, or an aryl group having 6 to 10 carbon atoms.

**7.** The polymer electrolyte composition according to claim 1, wherein the amount of the component (B) is 0.1 to 30 parts by weight based on 100 parts by weight of the component (A).

**8.** The polymer electrolyte composition according to claim 1, wherein the component (A) is a hydrocarbon polymer electrolyte.

**9.** The polymer electrolyte composition according to claim 8, wherein the hydrocarbon polymer electrolyte contains an aliphatic hydrocarbon or an aromatic hydrocarbon to which at least one kind of acidic group selected from the group consisting of a sulfonic acid group ($-SO_3H$), a carboxylic group (-COOH), a phosphonic acid group ($-PO_3H_2$) and a sulfonylimide group ($-SO_2NHSO_2-$) is introduced.

**10.** The polymer electrolyte composition according to claim 1, further comprising a component (C) defined below:

(C) a catalyst component.

**11.** A polymer electrolyte membrane prepared from the polymer electrolyte composition according to claim 1.

**12.** A membrane-electrode assembly having the polymer electrolyte membrane according to claim 11.

**13.** A catalyst layer prepared from the polymer electrolyte composition according to claim 10.

**14.** A membrane-electrode assembly having the catalyst layer according to claim 13.

**15.** A solid polymer fuel cell comprising the membrane-electrode assembly according to claim 12 or 14.

**INTERNATIONAL SEARCH REPORT**

International application No.
PCT/JP2009/054114

A. CLASSIFICATION OF SUBJECT MATTER
*H01M8/02*(2006.01)i, *H01B1/06*(2006.01)i, *H01M4/86*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, H01B1/06, H01M4/86, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-134269 A (Toyota Motor Corp.), 30 April, 2004 (30.04.04), Claims; Par. Nos. [0043] to [0047], [0055] & DE 10347457 A & CA 2444647 A | 1-15 |
| X | JP 2004-175997 A (Toyota Motor Corp.), 24 June, 2004 (24.06.04), Claims; Par. Nos. [0035] to [0051] & US 2004/0138352 A1 & DE 10355619 A | 1-15 |
| X | JP 2003-55337 A (The Nippon Chemical Industrial Co., Ltd.), 26 February, 2003 (26.02.03), Claims; Par. Nos. [0020], [0037] (Family: none) | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 April, 2009 (06.04.09) | Date of mailing of the international search report<br>21 April, 2009 (21.04.09) |
| Name and mailing address of the ISA/<br>Japanese Patent Office<br>Facsimile No. | Authorized officer<br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003031232 A
- JP 2003113136 A
- JP 2007177197 A
- JP 2005126684 A
- JP 2005139432 A
- JP 2007284653 A

### Non-patent literature cited in the description

- **HASEGAWANAOKI et al.** *Abstract of The 49th Proceedings of Battery Symposium in Japan,* 2008, 19
- **HASEGAWA NAOKI et al.** *Abstract of The 49th Proceedings of Battery Symposium in Japan,* 2008, 19
- **Masatoshi Watanabe et al.** Basics of Complex Chemistry, Werner Complex and Organic Metal Complex. Kodansha Ltd, 20 May 1989, 65-70
- *J. Electrochem. Soc.: Electrochemical Science and Technology,* 1988, vol. 135 (9), 2209